**Europäisches Patentamt**

**European Patent Office**

**Office européen des brevets**

(19)

(11) Veröffentlichungsnummer : **0 356 817 B1**

## (12) EUROPÄISCHE PATENTSCHRIFT

(45) Veröffentlichungstag der Patentschrift :
**27.12.91 Patentblatt 91/52**

(51) Int. Cl.⁵ : **B60T 8/34, B60T 13/56**

(21) Anmeldenummer : **89115175.5**

(22) Anmeldetag : **17.08.89**

(54) Bremsbetätigungs-Baugruppe für Kraftfahrzeuge.

(30) Priorität : **19.08.88 DE 8810531 U**

(43) Veröffentlichungstag der Anmeldung :
**07.03.90 Patentblatt 90/10**

(45) Bekanntmachung des Hinweises auf die
Patenterteilung :
**27.12.91 Patentblatt 91/52**

(84) Benannte Vertragsstaaten :
**DE ES FR GB IT SE**

(56) Entgegenhaltungen :
**DE-A- 3 609 974**
**FR-A- 2 350 234**

(73) Patentinhaber : **LUCAS INDUSTRIES public
limited company
Great King Street
Birmingham, B19 2XF West Midlands (GB)**

(72) Erfinder : **Heibel, Helmut
Wiesenstrasse 1
W-5431 Moschhelm (DE)**
Erfinder : **Gilles, Leo
Kreisstrasse 14a
W-5400 Koblenz (DE)**

(74) Vertreter : **Goetz, Rupert, Dipl.-Ing. et al
Wuesthoff & Wuesthoff Patent- und
Rechtsanwälte Schweigerstrasse 2
W-8000 München 90 (DE)**

EP 0 356 817 B1

## Beschreibung

Die Erfindung betrifft eine Bremsbetätigungs-Baugruppe für Kraftfahrzeuge mit
— einem Hauptbremszylinder, an den mindestens ein Bremskreis anschließbar ist,
— einem Modulator, der zum Modulieren des Druckes in dem Bremskreis an den Hauptbremszylinder angeschlossen ist,
— einem pneumatischen Bremskraftverstärker, der ein Gehäuse mit mindestens einer kolbenartig beweglichen Zwischenwand aufweist, und
— mindestens einem Verbindungsbolzen, der sich zur Übertragung von Reaktionskräften des Hauptbremszylinders auf eine Fahrzeugwand durch das Gehäuse und die Zwischenwand des Bremskraftverstärkers hindurcherstreckt.

Aus der DE 2845794 A1 ist ein Bremskraftverstärker in verschiedenen Ausführungen bekannt, der in der vorstehend beschriebenen Weise mittels Verbindungsbolzen mit einem Hauptbremszylinder zu einer Bremsbetätigungs-Baugruppe vereinigt ist. Eine solche Baugruppe ist auch schon durch einen Modulator ergänzt worden, der zum Modulieren des Druckes in mindestens einem Bremskreis an den Hauptbremszylinder angeschlossen worden ist. Dabei ist der Modulator auch mechanisch am Hauptbremszylinder befestigt worden.

Aus der DE 3611045 A1 ist ferner eine Bremsbetätigungs-Baugruppe bekannt, bei der ein hydraulischer Hochdruck-Bremskraftverstärker und ein Modulator an einem gemeinsamen Flansch befestigt sind, der zur Befestigung an der Spritzwand eines Fahrzeugs ausgebildet ist. An einer von diesem Flansch entfernten Stirnplatte des Bremskraftverstärkers ist ein Hauptbremszylinder befestigt, der vier Radbremszylinderanschlüsse hat. An jedem dieser Anschlüsse ist ein vom Modulator gesteuertes Elektromagnetventil befestigt, das zu diesem Zweck ein Einschraubgewinde aufweist.

Beiden im vorstehenden beschriebenen Bremsbetätigungs-Baugruppen ist gemeinsam, daß die mechanische und hydraulische Verbindung zwischen dem Hauptbremszylinder und mindestens den Ventilen, die dem Modulator zugeordnet sind, einfach herstellbar und bei Bedarf auch einfach wieder lösbar sind. Die zusätzliche Belastung des Hauptbremszylinders durch einen an ihm aufgehängten Modulator erschien bei Bremsbetätigungs-Baugruppen der eingangs beschriebenen Gattung auch unbedenklich, da der Hauptbremszylinder seinerseits über die Verbindungsbolzen sicher an einer Fahrzeugwand befestigt ist, ohne den Bremskraftverstärker selbst erheblich zu belasten.

Bei in größeren Serien gefertigten gattungsgemäßen Baugruppen sind jedoch im Betrieb vereinzelt Schäden am Hauptbremszylinder festgestellt worden, die mit den zu erwartenden mechanischen und hydraulischen Belastungen nicht erklärt werden konnten, weshalb man Werkstoff- oder Bearbeitungsfehler vermutet hat. Bei solchen Schäden muß grundsätzlich befürchtet werden, daß sie längere Zeit unbemerkt bleiben und plötzlich zu einem vollständigen Ausfall des Hauptbremszylinders führen.

Der Erfindung liegt die Aufgabe zugrunde, das Risiko, daß bei gegebenen Konstruktions-, Werkstoff- und Herstellungsbedingungen ein Leck am Hauptbremszylinder auftritt, erheblich zu vermindern, wenn nicht ganz auszuschließen.

Die Aufgabe ist erfindungsgemäß bei einer Bremsbetätigungs-Baugruppe der eingangs beschriebenen Gattung gelöst, deren Modulator unter Umgehung des Hauptbremszylinders ebenfalls an mindestens einem Verbindungsbolzen befestigt ist, der sich durch das Gehäuse des Bremskraftverstärkers hindurcherstreckt.

Damit wird eine mechanische Trennung von Modulator und Hauptbremszylinder erreicht ; die erforderlichen Verbindungsleitungen zwischen beiden sind hinreichend nachgiebig, so daß sie nur vernachlässigbar geringe mechanische Kräfte übertragen können.

Der Erfindung liegt die Erkenntnis zugrunde, daß die bisher nur sehr vereinzelt aufgetretenen, aber wegen ihrer möglicherweise schwerwiegenden Folgen sehr ernstzunehmenden Schäden an Hauptbremszylindern gattungsgemäßer Bremsbetätigungs-Baugruppen darauf beruhen, daß die bei Wirksamwerden des Modulators in rascher Folge öffnenden und schließenden Modulatorventile in einem mechanisch mit diesem Modulator verbundenen Hauptbremszylinder Schwingungen erzeugen, die sich Fahrzeugschwingungen und anderen den Hauptbremszylinder belastenden Faktoren, besonders den in ihm herrschenden hydraulischen Drücken, derart ungünstig überlagern können, daß in der Zylinderwand des Hauptbremszylinders ein Anriß entsteht, aus dem sich früher oder später ein Leck entwickeln kann.

Bei der erfindungsgemäßen Bremsbetätigungs-Baugruppe werden Schwingungen, die von den Modulatorventilen ausgehen, wegen der vom Hauptbremszylinder getrennten Befestigung des Modulators auf mechanischem Weg nicht oder stark abgeschwächt auf den Hauptbremszylinder übertragen. Dennoch läßt sich eine enge Nachbarschaft zwischen Hauptbremszylinder und Modulator aufrechterhalten, die wegen Platzknappheit und im Interesse kurzer Verbindungsleitungen grundsätzlich anzustreben ist.

Die Erfindung kann in der Weise ausgestaltet sein, daß der Modulator und ein den Hauptbremszylinder tragender Flansch an mindestens einem gemeinsamen Verbindungsbolzen befestigt sind, der sich durch den

2

EP 0 356 817 B1

Bremskraftverstärker und den Flansch hindurcherstreckt.

Bei einer anderen Ausführungsform der Erfindung ist der Modulator an einem Flansch befestigt, der auch den Hauptbremszylinder trägt und an mindestens einem Verbindungsbolzen befestigt ist, der sich durch den Bremskraftverstärker hindurcherstreckt.

In jedem Fall ist es zweckmäßig, wenn der Modulator über mindestens ein Gummifederelement befestigt ist.

Ferner ist es vorteilhaft, wenn die Befestigung des Modulators bei Fortbestehen der Befestigung des Hauptbremszylinders lösbar ist. Dadurch werden Montage und Demontage der Baugruppe erleichtert.

Schließlich ist es vorteilhaft, wenn der Modulator an den Hauptbremszylinder ausschließlich mit einer oder mehreren gebogenen, biegeweichen Anschlußleitungen angeschlossen ist. Auf diese Weise wird der Hauptbremszylinder von jeglicher vermeidbaren Belastung freigehalten.

Ausführungsbeispiele der Erfindung werden im folgenden anhand schematischer Zeichnungen mit weiteren Einzelheiten erläutert. Es zeigen :

Fig. 1    die Vorderansicht einer ersten erfindungsgemäßen Bremsbetätigungs-Baugruppe,
Fig. 2    den Axialschnitt II-II in Fig. 1,
Fig. 3    die Vorderansicht einer zweiten erfindungsgemäßen Bremsbetätigungs-Baugruppe,
Fig. 4    den Axialschnitt IV-IV in Fig. 3,
Fig. 5    die Vorderansicht einer dritten erfindungsgemäßen Bremsbetätigungs-Baugruppe,
Fig. 6    den Axialschnitt VI-VI in Fig. 5 und
Fig. 7    den Axialschnitt VII-VII in Fig. 5.

Bei allen drei dargestellten Ausführungsbeispielen gehören zu einer Bremsbetätigungs-Baugruppe ein hydraulischer Hauptbremszylinder 10, ein Modulator 12, ein Bremskraftverstärker 14 und mindestens ein Paar Verbindungsbolzen 16 und/oder 18. Die Verbindungsbolzen 16, 18 erstrecken sich parallel zur Achse A des Bremskraftverstärkers 14 durch diesen hindurch und dienen der Befestigung der gesamten Baugruppe an einer Fahrzeugwand 20. Der Hauptbremszylinder 10 ist gleichachsig mit dem Bremskraftverstärker 14 angeordnet, in dessen von der Fahrzeugwand 20 abgewandte Seite teilweise eingebaut und in üblicher Weise mittels eines Flansches 22 befestigt, der an einer Schulter 24 des Hauptbremszylinders 10 anliegt.

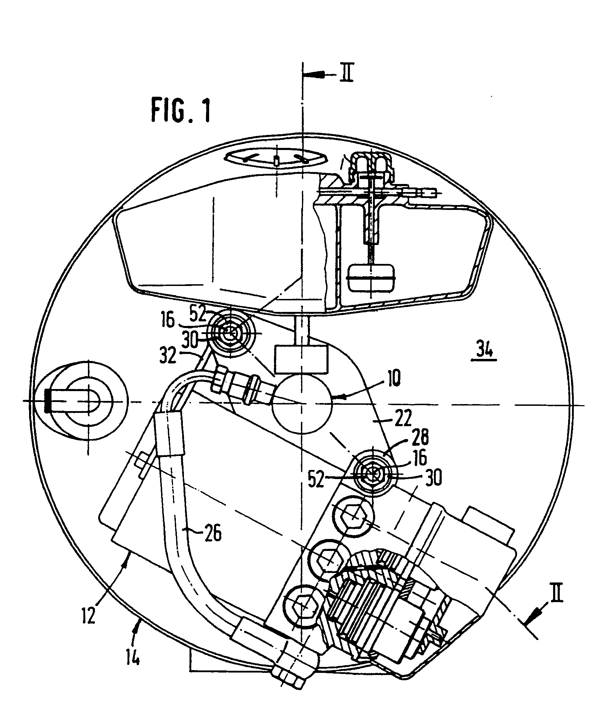

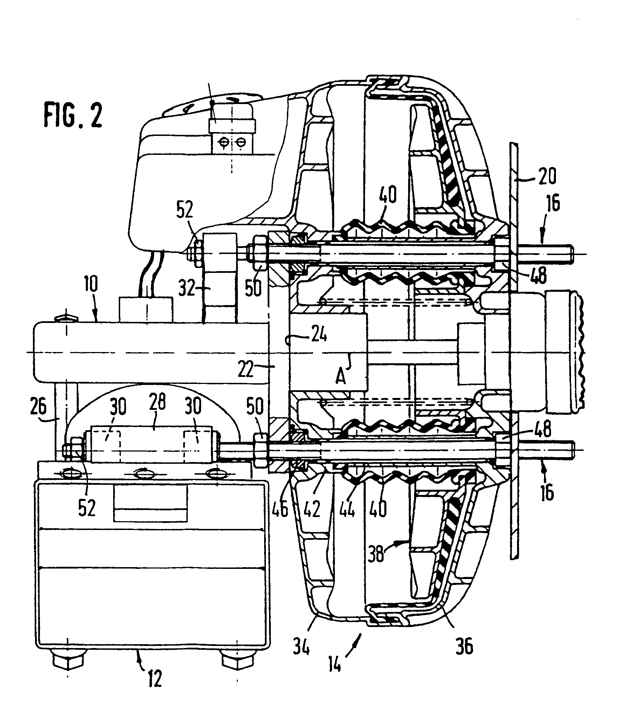

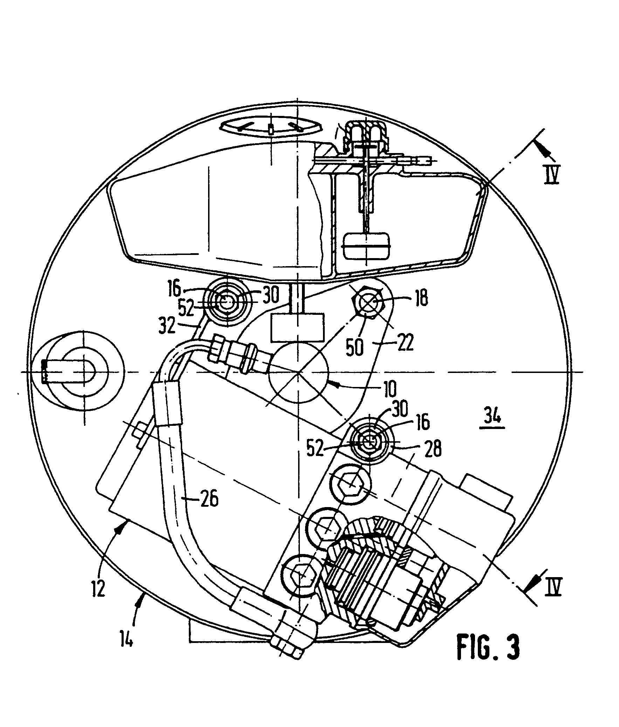

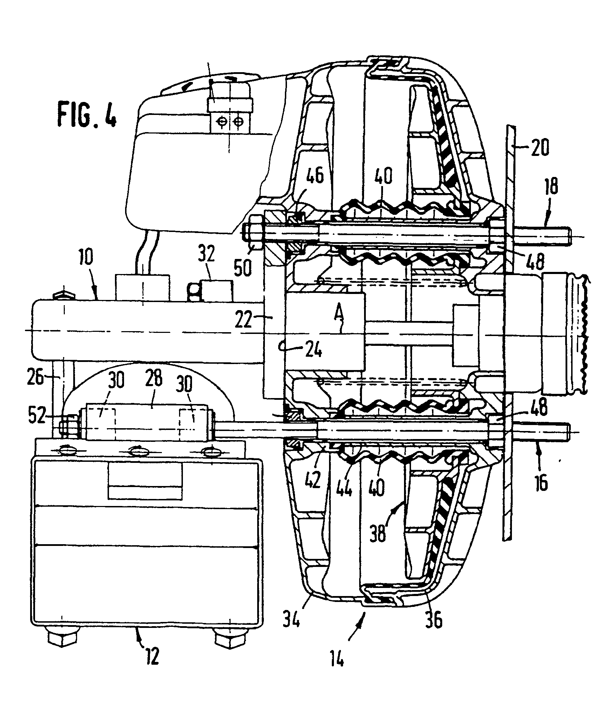

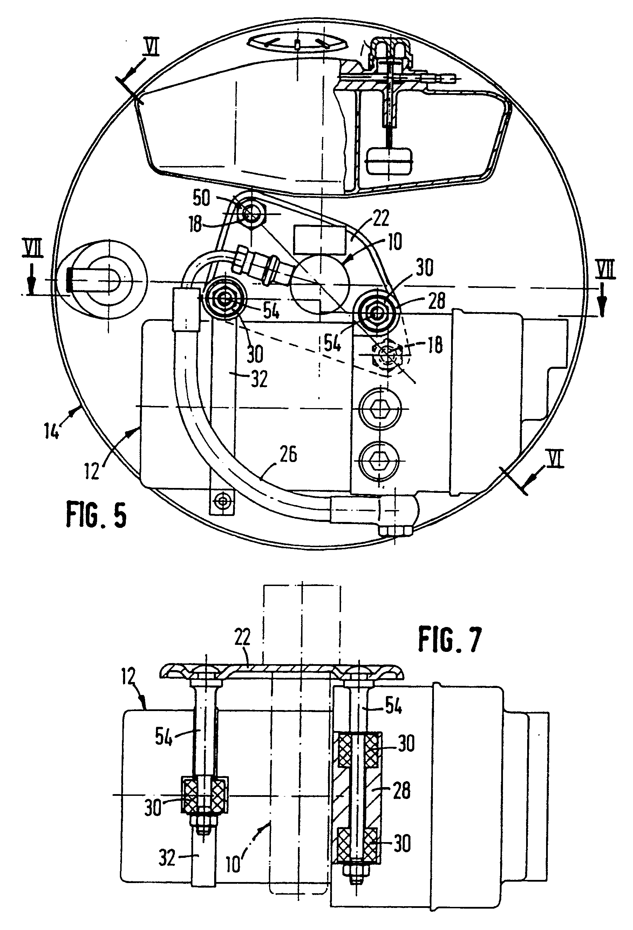

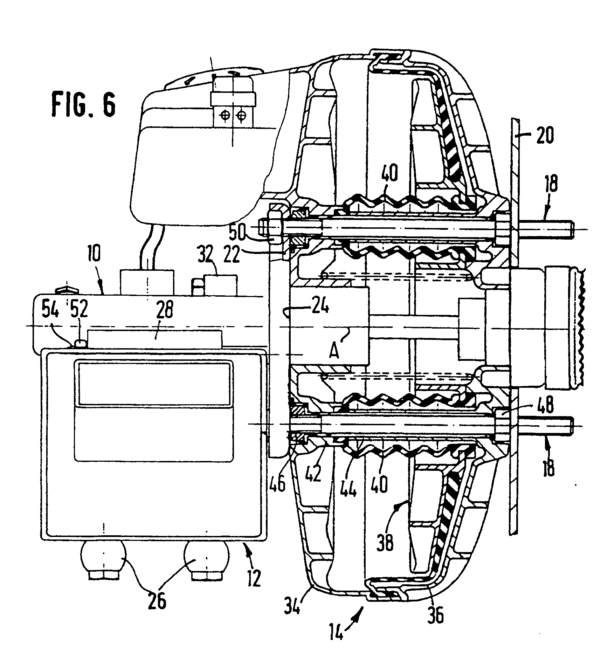

Der Flansch 22 ist in allen drei dargestellten Beispielen ein getrennt vom Bremskraftverstärker 4 hergestelltes plattenartiges Bauteil, nämlich gemäß Fig. 1 und 2 sowie gemäß Fig. 3 und 4 ein Guß- oder Schmiedeteil, gemäß Fig. 5 bis 7 hingegen ein Stanzteil aus Bleich, und ist auf den Teil des Hauptbremszylinders 10 aufgeschoben, der aus dem Bremskraftverstärker 14 nach vorne — in Fig. 2, 4 und 6 nach links — herausragt und einen geringeren Durchmesser hat als der in den Bremskraftverstärker 14 eingreifende Teil des Hauptbremszylinders 10. Der Flansch 22 kann an den Hauptbremszylinder 10 auch angeschweißt oder mit diesem in einem Stück hergestellt sein. In jedem Fall ist der Flansch 22 als gesondertes Bauteil, nicht als Bestandteil des Hauptbremszylinders 10 in dem Sinn zu betrachten, daß Kräfte, die den Modulator 12 belasten und von diesem möglicherweise über den Flansch 22 abgeleitet werden, nicht auch den Hauptbremszylinder 10 belasten.

Der Modulator 12 ist mit dem Hauptbremszylinder 10 durch eine gebogene Anschlußleitung 26 verbunden, die mindestens auf einem Teil ihrer Länge biegeweich und dadurch außerstande ist, nennenswerte mechanische Kräfte vom Modulator 12 auf den Hauptbremszylinder 10 zu übertragen. Am Modulator 12 ist ein hülsenartiges Befestigungsteil 28 ausgebildet, das ein Paar Gummifederelemente 30 enthält. Außerdem ist am Modulator 12 ein Bügel 32 befestigt, der mit einem weiteren Gummifederelement 30 eine bauliche Einheit bildet.

Der Bremskraftverstärker 14 hat bei allen drei dargestellten Ausführungsformen ein zweiteiliges Gehäuse 34, 36, das aus einem vorderen Gehäuseteil 34 und einem hinteren Gehäuseteil 36, beide aus Kunststoff, zusammengesetzt ist. Der Innenraum des Gehäuses 34, 36 ist durch eine kolbenartig verstellbare Zwischenwand 38 unterteilt, an der bei Betätigung der Bremse ein Druckunterschied herrscht, durch den der Hauptbremszylinder 10 in üblicher, nicht erläuterungsbedürftiger Weise betätigt wird. Wie ebenfalls üblich, ist die Zwischenwand 38 durch elastische Manschetten 40 gegen Rohrstutzen 42 und 44 abgedichtet, die am vorderen Gehäuseteil 34 bzw. hinteren Gehäuseteil 36 ausgebildet sind.

Bei der in Fig. 1 und 2 dargestellten Ausführungsform einer Bremsbetätigungs-Baugruppe sind nur zwei Verbindungsbolzen 16 vorgesehen, die beide sowohl den Flansch 22 wie den Modulator 12 unmittelbar mit der Fahrzeugwand 20 verbinden. Der untere dieser beiden Verbindungsbolzen 16 erstreckt sich durch das hülsenartige Befestigungsteil 28 des Modulators 12 und durch die in diesem enthaltenen Gummifederelemente 30 hindurch ; der obere Verbindungsbolzen 16 erstreckt sich hingegen durch das vom Bügel 32 umschlossene Gummifederelement 30 hindurch. Die beiden Gehäuseteile 34 und 36 sind durch an ihnen luftdicht anliegende,

3

auf die Verbindungsbolzen 16 aufgeschraubte Muttern 46 und 48 unmittelbar zusammengehalten, so daß sie sich auch dann nicht voneinander trennen können, wenn der Flansch 22 noch nicht montiert ist. Der Flansch 22 wird erst nach dem Einbau des Hauptbremszylinders 10 montiert und durch ein weiteres Paar auf die Verbindungsbolzen 16 aufgeschraubte Muttern 50 befestigt. Der Modulator 12 ist mit weiteren Muttern 52 auf den Verbindungsbolzen 16 befestigt.

Bei der in Fig. 3 und 4 dargestellten Ausführungsform sind zwei Paar Verbindungsbolzen 16 und 18 vorgesehen, die sich sämtlich durch den Bremskraftverstärker 14 achsparallel hindurcherstrecken und dessen Gehäuseteile 34 und 36 mittels Muttern 46 und 48 zusammengespannt halten. Die beiden Verbindungsbolzen 16 erstrecken sich im Gegensatz zu Fig. 1 und 2 am Flansch 22 vorbei, jedoch übereinstimmend mit Fig. 1 und 2 durch das hülsenartige Befestigungsteil 28 bzw. den Bügel 32 samt zugehörigen Gummifederelementen 30 hindurch. Die beiden Verbindungsbolzen 18 erstrecken sich hingegen — insoweit übereinstimmend mit Fig. 1 und 2 — durch den Flansch 22 hindurch, enden aber kurz vor diesem und dienen nicht der Befestigung des Modulators 12.

Bei der Ausführungsform gemäß Fig. 5 bis 7 ist nur ein Paar Verbindungsbolzen 18 vorgesehen, die an der Vorderseite des Flansches 22 enden und mit dem Modulator 12 nicht unmittelbar verbunden sind. Der Modulator 12 ist durch ein Paar Schrauben 54, die sich durch das hülsenartige Befestigungsteil 28 bzw. den Bügel 32 und die zugehörigen Gummifederelemente 30 erstrecken, am Flansch 22 befestigt, der somit sowohl den Hauptbremszylinder 10 wie den Modulator 12 trägt.

## Patentansprüche

1. Bremsbetätigungs-Baugruppe für Kraftfahrzeuge mit
— einem Hauptbremszylinder (10), an den mindestens ein Bremskreis anschließbar ist,
— einem Modulator (12), der zum Modulieren des Druckes in dem Bremskreis an den Hauptbremszylinder (10) angeschlossen ist,
— einem pneumatischen Bremskraftverstärker (14), der ein Gehäuse (34, 36) mit mindestens einer kolbenartig beweglichen Zwischenwand (38) aufweist, und
— mindestens einem Verbindungsbolzen (16, 18), der sich zur Übertragung von Reaktionskräften des Hauptbremszylinders (10) auf eine Fahrzeugwand (20) durch das Gehäuse (34, 36) des Bremskraftverstärkers (14) hindurcherstreckt, dadurch **gekennzeichnet,** daß der Modulator (12) unter Umgehung des Hauptbremszylinders (10) ebenfalls an mindestens einem Verbindungsbolzen (16, 18) befestigt ist, der sich durch das Gehäuse (34, 36) des Bremskraftverstärkers (14) hindurcherstreckt.

2. Baugruppe nach Anspruch 1, dadurch **gekennzeichnet,** daß der Modulator (12) und ein den Hauptbremszylinder (10) tragender Flansch (22) an mindestens einem gemeinsamen Verbindungsbolzen (16, 18) befestigt sind, der sich durch den Bremskraftverstärker (14) und den Flansch (22) hindurcherstreckt.

3. Baugruppe nach Anspruch 1, dadurch **gekennzeichnet,** daß der Modulator (12) an einem Flansch (22) befestigt ist, der auch den Hauptbremszylinder (10) trägt und an mindestens einem Verbindungsbolzen (16, 18) befestigt ist, der sich durch den Bremskraftverstärker (14) hindurcherstreckt.

4. Baugruppe nach einem der Ansprüche 1 bis 3, dadurch **gekennzeichnet,** daß der Modulator (12) über mindestens ein Gummifederelement (30) befestigt ist.

5. Baugruppe nach einem der Ansprüche 1 bis 4, dadurch **gekennzeichnet,** daß die Befestigung des Modulators (12) bei fortbestehender Befestigung des Hauptbremszylinders (10) lösbar ist.

6. Baugruppe nach einem der Ansprüche 1 bis 5, dadurch **gekennzeichnet,** daß der Modulator (12) an den Hauptbremszylinder (10) ausschließlich mit einer oder mehreren gebogenen, biegeweichen Anschlußleitungen (26) angeschlossen ist.

## Claims

1. Brake actuating assembly for motor vehicles comprising
— a master brake cylinder (10) to which at least one brake circuit is connectable,
— a modulator (12) which is connected to the master brake cylinder (10) to modulate the pressure in the brake circuit,
— a pneumatic braking force booster (14) which comprises a housing (34, 36) having at least one partition (38) movable in piston-like manner and
— at least one connecting pin (16, 18) which extends through the housing (34, 36) of the braking force booster (14) for transmitting reaction forces of the master brake cylinder (10) to a vehicle wall (20), characterized in that the modulator (12) is likewise mounted with bypassing of the master brake cylinder (10) on at least one connecting pin (16, 18) which extends through the housing (34, 36) of the braking force booster (14).

2. Assembly according to claim 1, characterized in that the modulator (12) and a flange (22) carrying the master brake cylinder (10) are mounted on at least one common connecting pin (16, 18) which extends through the braking force booster (14) and the flange (22).

3. Assembly according to claim 1, characterized in that the modulator (12) is secured to a flange (22) which also carries the master brake cylinder (10) and is mounted on at least one connecting pin (16, 18) which extends through the braking force booster (14).

4. Assembly according to any one of claims 1 to 3, characterized in that the modulator (12) is mounted via at least one rubber spring element (30).

5. Assembly according to any one of claims 1 to 4, characterized in that the securing of the modulator (12) is releasable with continuing securing of the master brake cylinder (10).

6. Assembly according to any one of claims 1 to 5, characterized in that the modulator (12) is connected to the master brake cylinder (10) solely with one or several curved pliable connecting lines (26).

## Revendications

1. Appareillage d'actionnement de freins pour véhicules automobiles, comportant :

— un maître-cylindre de frein (10), auquel peut être relié au moins un circuit de freinage,

— un modulateur (12), qui est relié au maître-cylindre de frein (10) pour une modulation de la pression dans le circuit de freinage,

— un amplificateur pneumatique (14) de force de freinage, qui comporte un carter (34, 36) pourvu d'au moins une paroi intermédiaire (38) mobile à la façon d'un piston, et,

— au moins un boulon de liaison (16, 18), qui traverse le carter (34, 36) de l'amplificateur de force de freinage (14) pour une transmission de forces de réaction du maître-cylindre de frein (10) à une paroi (20) du véhicule,

— caractérisé en ce que le modulateur (12) est fixé, en contournant le maître-cylindre de frein (10), également sur au moins un boulon de liaison (16, 18), qui traverse le carter (34, 36) de l'amplificateur de force de freinage (14).

2. Appareillage selon la revendication 1, caractérisé en ce que le modulateur (12) et une bride (22) portant le maître-cylindre de frein (10) sont fixés sur au moins un boulon de liaison commun (16, 18), qui traverse l'amplificateur de force de freinage (14) et la bride (22).

3. Appareillage selon la revendication 1, caractérisé en ce que le modulateur (12) est fixé sur une bride (22), qui porte également le maître-cylindre de frein (10) et qui est fixée sur au moins un boulon de liaison (16, 18) qui traverse l'amplificateur de force de freinage (14).

4. Appareillage selon l'une des revendications 1 à 3, caractérisé en ce que le modulateur (12) est fixé par l'intermédiaire d'au moins un élément élastique en caoutchouc (30).

5. Appareillage selon l'une des revendications 1 à 4, caractérisé en ce que la fixation du modulateur (12) est séparable lors d'un maintien de la fixation du maître-cylindre de frein (10).

6. Appareillage selon l'une des revendications 1 à 5, caractérisé en ce que le modulateur (12) est relié au maître-cylindre de frein (10) exclusivement par un ou plusieurs conduits de liaison (26) coudés et flexibles.

FIG. 1

FIG. 2

FIG. 3

FIG. 4

FIG. 5

FIG. 7

FIG. 6